# EUROPEAN PATENT SPECIFICATION

(11) **EP 3 562 736 B1**
(45) Date of publication and mention of the grant of the patent: **24.11.2021**
(21) Application number: 17835506.1
(22) Date of filing: 28.12.2017
(51) Int. Cl.: B62K 15/00, B62K 19/02

(54) **FRAME FOR VEHICLE WITH AT LEAST TWO WHEEL AXLES AND VEHICLE WITH TWO WHEEL AXLES COMPRISING THE FRAME**
RAHMEN FÜR FAHRZEUG MIT MINDESTENS ZWEI RADACHSEN UND FAHRZEUG MIT ZWEI RADACHSEN MIT DEM RAHMEN
CHÂSSIS POUR VÉHICULE DOTÉ D'AU MOINS DEUX ESSIEUX DE ROUE ET VÉHICULE DOTÉ DE DEUX ESSIEUX DE ROUE COMPRENANT LE CHÂSSIS

(30) Priority: 28.12.2016 IT 201600131589
(43) Date of publication of application: 06.11.2019
(73) Proprietor: HENJOY S.R.L., 00046 Grottaferrata (RM) (IT)
(72) Inventor: BERTIN, Daniele Maria, 20139 Milano (IT)
(74) Representative: Zermani, Umberto
(86) International application number: PCT/IB2017/058451
(87) International publication number: WO 2018/122753

(56) References cited:
- EP-A1- 1 068 128
- WO-A1-86/05155
- WO-A1-2004/005123
- CN-A- 105 172 964
- GB-A- 2 309 015
- US-A1- 2008 303 243

## Description

The present invention relates to a folding frame for two-wheeled vehicles and a two-wheeled vehicle equipped with said frame.

In the technical field of the transportation of people along not very long paths, with a regular road surface, such as urban cycle lanes, the use of two-wheeled vehicles, commonly exemplified by bicycles, comprising two wheels, a front one and a rear one, a motion transmission linkage connecting the actuation pedals and the rear wheel, a steering handlebar connected to the front wheel, is known.

Common bicycles, albeit functional, have the drawback of being large and heavy, basically because of the complexity of the frame, which is needed to connect all the components, as well as of the space taken up by the wheels, thus not making their transportation easy, especially when travelling by a different means of transport on which the bicycle must be loaded.

To work out at least a partial solution to these problems, models of folding bicycles characterised by a foldable structure and means designed to allow the folding are known, too.

However, the mode of folding according to the solutions of the prior art is still unnatural, and the folded bicycle has a weight, shape and size typically not suitable to be hand-carried by the user.

For example, the documents WO86/05155, CN105172964, US2008303243, GB2309015 and WO 2004005123 show folding bicycles wherein the steering axle is, in all respects, an integral part of the frame, which obviously results in a poor driving quality and, moreover, prevents an optimal positioning of the saddle.

Another known solution is disclosed, for example, in the document EP1068128; this solution, however, proves to be very complex because of the many components of the frame and also extremely uncomfortable for the user, since at each folding the distance between the pedal shaft and the wheel axle is thus reduced, with the consequent disengagement of the drive chain from the chainrings.

Therefore, there arises the technical problem of providing a folding frame for two-wheeled vehicles able to overcome the drawbacks of the prior art, especially by providing a folding frame with lower size and weight for a vehicle with at least two wheels.

Moreover, as part of this problem, such frame and vehicle are also required to be suitably foldable in a simple and intuitive way, even by nonspecialised users, as well as easy and inexpensive to produce and assemble.

These results are achieved according to the present invention by a folding frame on a vehicle with at least two wheels according to the characteristics of one or more of the claims 1 to 10, as well as by a folding frame for a vehicle with at least two wheels having the characteristics of one or more of the claims 11 or 12.

In particular, the results are achieved by a vehicle with at least two wheel axles, extending along a set of three mutually orthogonal directions, respectively, longitudinal for the length, vertical for the height, and transverse for the width, said wheel axles being parallel to the transverse direction, comprising at least one front wheel and at least one rear wheel, a folding frame, a saddle, a rear fork arm and a steering arm.

The folding frame has an "inverted V" shape on a longitudinal-vertical plane defined by the longitudinal direction of the length and by the vertical direction of the height of the frame, and comprises a first rear arm and a second front arm merged in an upper intersection portion, the ends of the arms, facing the upper intersection portion, being arranged, in use, at a lower level than the one of the intersection portion in the vertical direction. The end of the second arm is coupled to a front steering tube with a substantially vertical axis or a slight tilt toward the intersection portion of the "inverted V" and tilted with respect to said second arm so as to define with it an (acute) angle on the longitudinal-vertical plane.

At the intersection portion of the two arms a first transverse axis joint is placed in order to allow the folding.

The first or the second arm has an extension beyond the intersection portion defined by a section of the arm whose free end is coupled to a saddle of the vehicle.

According to one aspect of the invention, the first arm is intended to support and discharge to the ground (through the wheel) at least part of a vertical load weighing on the saddle. Preferably, the second arm is intended to support and discharge to the ground (through the wheel) the remaining part of the vertical load weighing on the saddle.

The rear fork arm rigidly extends between a transverse rotation axis of the pedals and a transversal rotation axis of the rear wheel, wherein said fork arm is rigidly connected or pivoted to the end of the first arm.

The steering arm is rotatably inserted in said steering tube and associated with said front wheel.

It should be noted that, preferably, the direction of extension of the second arm makes an angle β of 40° to 70° with an axis parallel to the vertical direction and passing through the end of the first arm facing the intersection portion.

Advantageously, the frame thus proves to be simple, effective in discharging loads to the ground and very easy to fold.

Further details may be disclosed by the following description of a nonlimiting example of implementation of the object of the present invention, provided with reference to the accompanying drawings, which show:
in figure 1 : a schematic side view of the frame according to the present invention for vehicles with at least two wheels;
in figure 2 : a schematic side view of an alternative embodiment of the frame in fig.1;
in figure 3 : a schematic side view of the frame of fig. 1 applied to a two-wheeled vehicle;
in figure 4 : a schematic side view of a first alternative embodiment of the frame applied to the vehicle in fig.3;
in figure 5 : a schematic side view of a second embodiment of the frame applied to the vehicle in fig.3;
in figure 6 : a perspective front view of an embodiment of a two-wheeled vehicle equipped with a frame according to the invention;
in figure 7 : a perspective back view of the vehicle in fig. 6;
in figure 8 : a detailed view of the bearing units of the front and the rear wheels of the vehicle in fig. 6;
in figure 9a, 9b: the closing sequence of a two-wheeled vehicle with a folding frame according to the invention;
in figure 10: a schematic side view of a further embodiment of the vehicle according to the present invention.

With reference to the appended figures, number 100 indicates a vehicle with at least two wheel axles according to the present invention.

This vehicle comprises at least one front wheel 131 and at least one rear wheel 132, a frame 10, a saddle 110, a rear fork arm 130 and a steering arm 141.

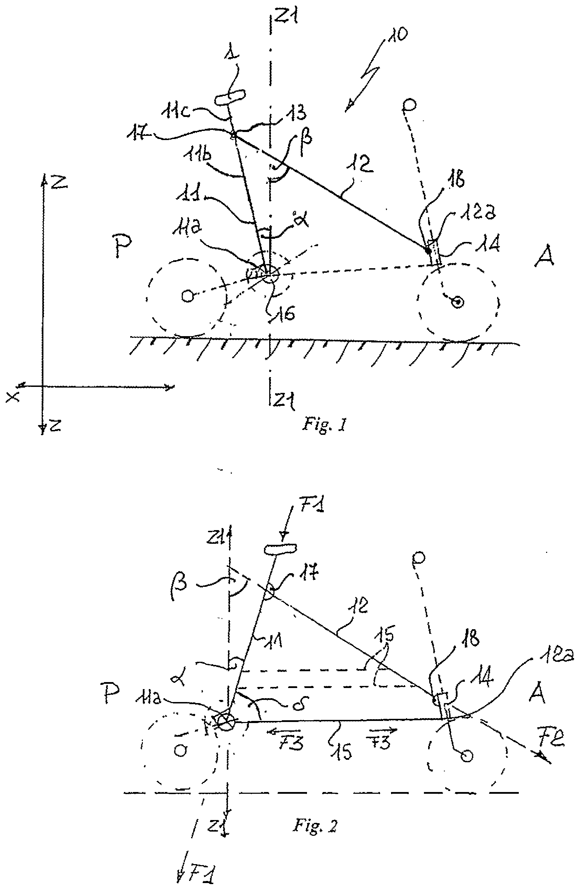

As shown in figure 1, assuming, only for ease of description and without limitation to, a reference set of three mutually orthogonal directions, respectively, longitudinal X-X for the length and, in use, parallel to the resting surface of a two-wheeled vehicle, vertical Z-Z for the height and transverse Y-Y for the width of the frame, as well as a front part A corresponding to that part of the frame which, in use, corresponds to the front wheel of a two-wheeled vehicle and a rear part P facing the previous one.

The frame 10 according to the invention substantially looks like an "inverted V" with a first rear arm 11 and a second front arm 12 departing from a intersection portion or common upper vertex 13 (hereinafter referred to, without thereby losing its generality, the as vertex 13).

The ends 11a,12a of the arms 11,12, facing those of the vertex 13, are therefore located at a lower level than the one of the vertex 13 itself in the vertical direction Z-Z.

According to one aspect of the invention, the first arm 11 is intended to support and discharge to the ground at least part of a vertical load weighing on the saddle 110 (which is connected to the first 11 or to the second arm 12).

More precisely, the first 11 and the second arm 12 are arranged so that a vertical load applied by the user to the saddle 110 is divided between the two arms, discharging the weight to the ground (through the wheels 131 and 132).

In this regard, preferably the second arm 12 (or one of its direction of extension/elongation) makes an angle of 40° to 70° with respect to an axis Z1-Z1 parallel to the vertical direction Z-Z and passing through the end 11a of the first arm 11 facing the vertex 13.

More preferably, the first arm 11 makes an angle α with said vertical axis Z1-Z1 parallel to the vertical direction Z-Z and passing through the end 11a of the first arm itself, facing those of the vertex 13; said angle α ranges from a negative value -20° (fig.1), at which the first arm 11 is tilted toward the rear part P with respect to the vertical axis Z1-Z1, so as to bring the vertex 13 in a rear position, in the longitudinal direction X-X, with respect to the end 11a facing the vertex 13 of the first arm 11; to a positive value of 20° (fig. 2), at which the arm 11 is tilted toward the front part A so as to bring the vertex 13 in front position in the longitudinal direction X-X with respect to the end 11a facing the vertex 13 itself.

The second arm 12 makes an angle β with the same axis Z1-Z1; the angle β is preferably of 40° to 70°. In the embodiments where the end 11a of the first arm facing the one of the vertex 13 is placed in a rear position with respect to the vertex 13 itself, it is understood that the angle β is formed between the direction of extension of the second arm 12 and said vertical axis Z1-Z1 passing through the end 11a of the first arm 11.

According to preferred embodiments the end 11a facing the vertex 13 of the first arm 11 is integral with a rotation axis 16 parallel to the transverse axis Y-Y; preferably, said rotation axis is implemented by a tube 16a, whose function will hereinafter be more evident.

Preferably, the end 11b of the first arm 11 placed at the vertex 13 is extended beyond the vertex with a section 11c of the arm, whose free end will be suitable to be coupled to the saddle 110 of the two-wheeled vehicle, as described below.

Preferably, the length of the extended section 11c may be adjusted, for example telescopically or likewise.

Alternatively, the end 12b of the second arm 12 placed at the vertex 13 could be the one which is extended beyond the vertex with a section of the arm whose free is suitable to be coupled to the saddle 110.

What is noted for the purpose of the invention is that the saddle 110 is placed on the extension of the first 11 or the second arm 12 beyond the vertex 13, not on the appendixes of the arms located between the two ends 11a, 11b, 12a, 12b.

Preferably, the end 12a of the second arm 12 facing the vertex 13 is coupled to a tube 14 with a substantially vertical axis, or with a slight tilt toward the vertex 13 of the "inverted V"; also in this case the use of the tube will be evident in relation to the two-wheeled vehicle of the present invention.

More precisely, the tube 14 *(i.e.,* the steering axle) is tilted with respect to the second arm 12, so as to define an angle with it on the longitudinal-vertical plane X-Z. In other words, the tube 14 is not coaxial with the second arm 12.

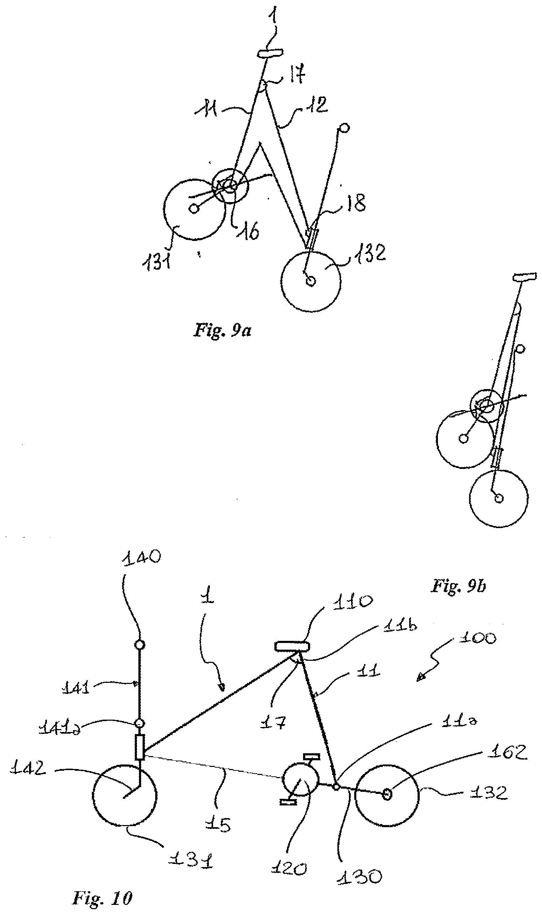

As shown in fig. 2, there is provided a further embodiment of the frame according to the invention that comprises a tie rod 15 for connecting the arms 11,12 of the inverted V, preferably between the two ends 11a, 12a. Alternatively (or together), with reference to the embodiment in figure 10, the tie rod 15, preferably in the form of wire/cable, connects the two arms 11, 12 through the fork arm 130; in other words, the tie rod 15 connects the fork arm 130 with the second arm 12.

Preferably, the tie rod 15 will be substantially parallel to the longitudinal direction X-X and/or tilted with respect to the same axis X-X by an angle δ of -30° to +30°.

As can be seen from fig.2, the tilt with a positive value of α between the first arm 11 and the vertical direction Z1-Z1 takes the vertex 13 in a forward position toward the front part with respect to the opposite end 11a; this results in an advantageous decomposition of the forces exerted on the frame when it is part of a vehicle, e.g., a two-wheeled one; actually, with reference to fig.2, where the parts of the vehicle are indicated with dashed lines, it is noted that the saddle 1 of the vehicle is arranged in a longitudinal position between the horizontal rear tube 16 and the vertical front tube 14, *i.e.,* between the pedal shaft and the axle of the front wheel of the vehicle; the force F due to the pedalling user's weight and movements therefore is decomposed according to a first component F1 acting on the first arm 11 and a second component F2 acting along the second arm 12.

The possible stretching apart of the "inverted V" being prevented by the presence of the tie rod 15, which exerts opposing forces F3.

The forward tilt of the arm 11, which connects the saddle 1 to the centre of pedal shaft 16 is completely unconventional. This tilt, in addition to allowing the realization of a stable and efficient support structure from a structural point of view, provides a disposition of the passenger's body during the movement which is less crouched and advantageously brings the centre of gravity of the user in a position between the two ends 11a, 12aof the arms 11,12.

The position is similar to the so-called "out of the saddle", which is employed by cyclists to have more power while riding uphill. The more linear position of the body, although marginally less efficient from the point of view of propulsion, is suitable for a tourist use, since the back, when is less bent, is more relaxed. The saddle with this posture should preferably be anatomic, in order not to stress the central pubic area. The optimal value of the angle α takes into account the structural efficiency (distribution of the loads on the arms), including the connection part with the rear wheel, so that the centre of gravity of the passenger vehicle system remains longitudinally between the two supports of the wheels. These two aspects, resulting in a longitudinally backward position of the pedal axis (α as great as possible), are counterbalanced by having the pedals in an adequate position for the passenger's posture.

The option with a negative tilt value of α of the first arm 11 with respect to the vertical axis Z1-Z1, vice versa, takes the vertex 13 in a backward position toward the rear part with respect to the opposite end 11a, as in conventional bicycles. The advantageous decomposition of the forces exerted on the frame, in components F1 and F2, when this is part of the vehicle, takes place in this case, too. Furthermore, although the component F1 tilted in the opposite direction to the vertical Z1-Z1 compared to the previous case, the tendency to make the "inverted V" stretch apart remains, if we consider also the presence of the support of the rear wheel with the extension of the wheel itself backwards in a longitudinal direction, as connected and described hereinafter. As a result, the element 15 always acts as a tie rod.

The tilt of the arm 12 is a function of the general size of the bicycle, and the more it is tilted (small β), the higher the structural efficiency will be. An advantage is provided also by the folding linkage, as explained hereinafter. The tilt of the tie rod 15 essentially depends on the size of the structure, and is basically horizontal.

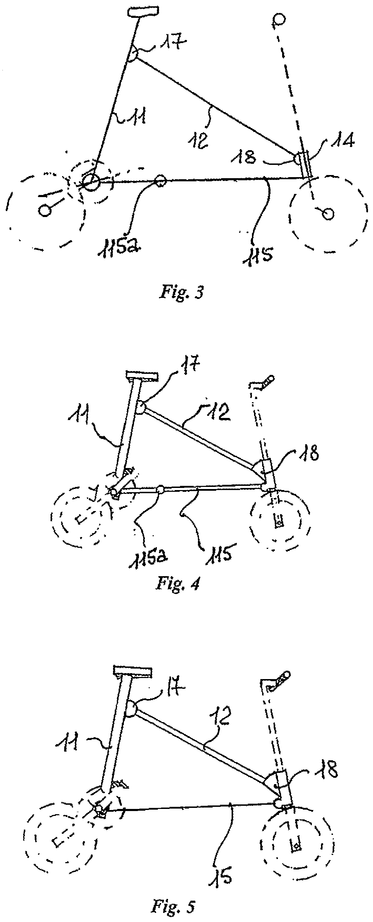

As shown in figs. 3, 4, 5, the folding frame according to the invention provides that the coupling between the second arm 12 and the first arm 11 at the vertex 13 of the V is implemented by means of a first horizontal (transverse) axis joint/hinge 17, so as to allow the relative rotation for the folding of the frame in order to reduce the overall size (figs.9a,9b).

Preferably, the coupling between the end 12a of the second arm 12 facing the vertex 13 and the corresponding vertical axis tube 14 is implemented by means of a second transverse axis joint 18, which allows the relative rotation of the front tube 14 with respect to the arm 12, for the folding of the steering axle inserted in the tube 14 when the frame is part of a two-wheeled vehicle (figs. 9A, 9b).

Alternatively, the joint 18 could also a vertical axis one (or anyway lying on the vertical-longitudinal plane).

Advantageously, both the joint 17 at the vertex 13 of the V and the joint 18 of the other end are expected to comprise a mechanical stop to prevent the convex angle between the respective connected elements from opening beyond a certain value, as well as with a safety lock intended to prevent the accidental closure of the frame when not required. It is understood that the values of β and α specified above are to be assessed when the frame is open.

In the event of presence of the tie rod 15, it can be implemented:
+ by a rigid element 115 (fig. 3), *e.g.,* a tubular one (fig. 4), which has a transverse axis hinge 115a enabling its folding;

In this case, there are joints with safety locking means (not shown) also at the opposite ends of the rigid tie rod 115 connecting the latter to the rear tube 16 and the front tube 14; preferably, and in order to reduce the number of components, the locking means are associated only with the hinge 115a;
said safety elements are conventional *per se* and are not described in detail.

+ alternatively and preferably, the tie rod may be implemented by a wire 15 (fig. 5), e.g., made of steel, which is kept in tension by said components F1, F2 of the force F, but can be easily folded in the absence of these forces.

In both the embodiments it is possible to insert an elastic element between a tie rod end and one of the two points of connection to the frame; the elastic element being intended to cushion the shocks due to the ground roughness.

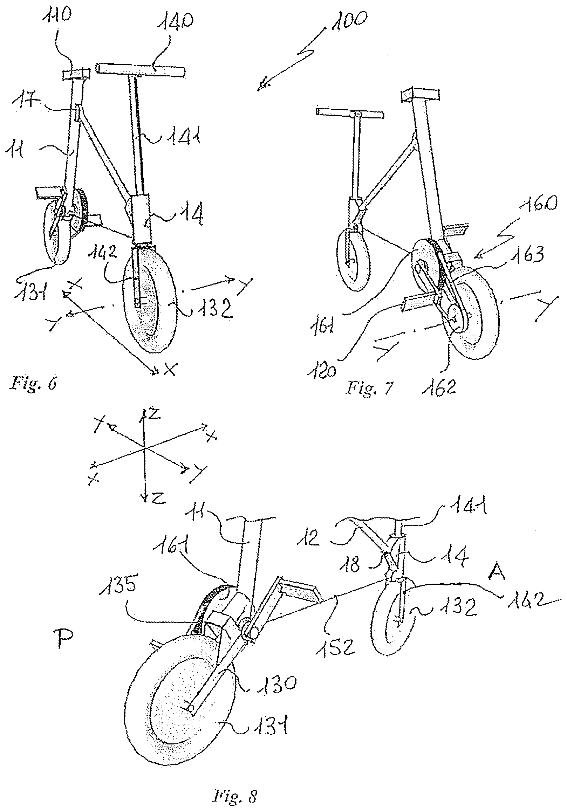

In figs. 6-10 is shown the entire folding vehicle 100 with at least two wheels, equipped with the folding frame 10 according to the invention.

As can be seen in figures, the vehicle comprises:
+ at least the rear wheel 131 and the front wheel 132;
+ the saddle 110 integral with the vertex end of the first arm 11 of the inverted V or with the free end of the extension 11c of the first arm;
+ the pedals 120, whose rotation axis is preferably inserted into the rear transverse axis tube 16 of the end of the first arm 11;
+ the rear fork arm 130 supporting the rear wheel 131, preferably integral with the same rear transverse axis tube 16 of the end of the first arm 11; alternatively, the fork 130 may be suitably hinged to the tube 16 in order to facilitate the further folding of the vehicle.

Thanks to this solution, the size of the vehicle completely folded may be reduced, the centre of rotation of the fork being formed by the same axis as that of the chainring 161 of the motion transmission mechanism described hereinafter, the chain or belt of the latter does not experience any variation of tension because of the folding. To hold the fork in place with the bicycle is in motion, a mechanical stop 135 against a part of the arm 11 is provided (fig.8) . At the stop, an elastic element may be inserted to soften the accelerations which may be transmitted to the passenger when seated.

It should be noted that, regardless of its positioning, the fork arm 130 rigidly extends between a transverse rotation axis of the pedals 120 and a transverse rotation axis of the rear wheel 131.

Advantageously, the distance between the two axes stays thus unchanged regardless of the open or folded condition of the frame 1.

This fork arm 130 can be pivoted to the end 11a of the first arm 11, as described and illustrated above, or rigidly connected thereto.

Preferably, as described above, the fork arm 130 is connected to one of its ends, defined by the pedal shaft 120, at the end 11a of the first arm 11.

Alternatively, however, this fork arm 130 might be connected to the end 11a of the first arm 11 with its own intermediate portion, arranged between the pedal shaft 120 and the axle of the rear wheel 131.
+ a handlebar 140 integral with one end of a steering arm 141 coaxially inserted into the front vertical axis tube 14 beyond which it extends to end with an end fork 142 supporting the front wheel 132.

It should be noted that, in certain embodiments (Fig. 10), the steering arm 141 comprises a transverse joint 141a placed between the tube 14 and the handlebar 140, preferably near said tube 14.

This transverse joint 141a has also at least one stop and fastening means. Such means allow to limit the tilt of the steering arm 141 and, preferably, to block its position respectively in an operative position, coaxial with the steering axle, and in a folded position, tilted with respect to the steering axle toward the second arm 12.

Preferably, in the folded position the steering arm 141 is substantially parallel to (or, anyway, alongside) the second arm 12.

It should be noted that such transverse joint 141a is preferably alternate, but optionally complementary to the joint 18 located between the steering tube 14 and the second arm 12.

According to preferred embodiments, the motion transmission between the pedal shaft and the rear wheel is expected to comprise a group composed of a disc or chainring 161, coaxial with the pedal shaft 120, a pulley 162 and a flexible transmission element 163, belt or chain.

The placement between the frame and the pulley transmission mechanism provides that they lie on staggered planes along the transverse axis Y-Y. The pedal shaft transmits the rotary motion to the chainring preferably via direct connection, these being integrally connected.

To achieve an advantageous ratio of the vehicle speed in relation to the pedalling rotation speed, the metric development, *i.e.,* the distance travelled as a result of a complete revolution of the pedals, must be useful to employ; the metric development in this vehicle is obtained by suitably sizing the diameters of the three rotary elements involved in the motion transmission between the pedal and the rear wheel; correspondingly, the diameter of the chainring is substantially greater than that of the pulley. A less unbalanced ratio between the two diameters may anyway be achieved by interposing a coaxial reducer between the pedal shaft and the chainring axle. The transmission ratio is made variable by means of a derailleur gear able to commute the chain or belt on pulleys of different diameters.

Figs. 9a and 9b illustrate the folding sequence according to which the various joints/hinges are unlocked and the movable arms of the V rotate around the transverse rotation axes of the joints/hinges in order to have the frame and the vehicle folded along the longitudinal axis of the arms of the V.

In the figures the tie rod 15 with the flexible wire which is pending and may be wrapped up or bent is not evident, while in the case of the rigid tie rod 115, shown in figure 9a as partially bent, it remains folded inside and is not visible in figure 9b.

The folding is thus very easy and intuitive and can be carried out up to a substantial alignment of the two arms 11,12 of the frame; the particular placement between the frame and the pulley transmission linkage, which are on staggered planes, also avoids relative interferences which would increase the transverse thickness (Y-Y) of the folded vehicle.

In order to further reduce the size in the folded position, the rear wheel can retract with respect to the road position. The retraction of the rear wheel, as shown in fig. 9b, takes place by rotating the fork around the pedal shaft on which it can be hinged.

As a result, the frame according to the invention allows to provide a solution to the problems of the prior art, especially proving to be suitable to determine: an improved distribution of the forces exerted on the frame itself; an easy folding for a substantial reduction in the size so as to allow its transportation by different means of transport, as well as an overall reduction of the weights that facilitates the handling and transportation of the vehicle equipped with the said frame.

In the folded position the vehicle can be easily transported by dragging it by hand with the aid of the resting front wheel, which is located in a lower position with respect to the folded body.

Although described within the context of some embodiments and some preferred examples of implementation of the invention, the scope of protection of the present patent is determined only by the following claims.

## Claims

1. A folding frame for a vehicle with at least two wheel axles (131,132), extending along a set of three mutually orthogonal directions, respectively longitudinal (X-X) for length, vertical (Z-Z) for height, and transverse (Y-Y) for width, said wheel axles being parallel to the transverse direction (Y-Y); said frame having an "inverted V" shape on a longitudinal-vertical plane (X-Z) defined by the longitudinal direction (X-X) of the length and by the vertical direction (Z-Z) of the height of the frame (10), and comprising a first rear arm (11) and a second front arm (12) merged in an upper intersection portion (13), the ends (11a, 12a) of the arms (11,12), facing the upper intersection portion (13), being arranged, in use, at a level lower than the one of the intersection portion (13) in the vertical direction (Z-Z), being the end (12a) of the second arm (12) coupled to a front steering tube (14) with an axis tilted with respect to said second arm (12) so as to define an angle with it on the longitudinal-vertical plane (X-Z);
wherein a first (17) transverse axis joint is placed at the intersection portion (13) of the two arms (11,12)
and wherein the first (11) or the second arm (12) has an extension beyond the intersection portion (13) defined by a section (11c) of the arm whose free end is coupled to a saddle (110) of the vehicle,
and wherein the first arm (11) is intended to support and discharge to the ground at least part of a vertical load weighing on the saddle (110).

2. A folding frame according to claim 1, **characterised in that**, in a configuration of use, the direction of extension of the second arm (12) makes an angle β of 40° to 70° with respect to an axis (Z1-Z1) parallel to the vertical direction (Z-Z) and passing through the end (11a) of the first arm facing the intersection portion (13).

3. A vehicle with at least two wheel axles (131, 132), extending along a set of three mutually orthogonal directions, respectively longitudinal (X-X) for length, vertical (Z-Z) for height, and transverse (Y-Y) for width, said wheel axles being parallel to the transverse direction (Y-Y), comprising:
- at least one front wheel (132) and at least one rear wheel (131);
- a folding frame according to claim 1 or 2, wherein said axis of the front steering tube (14) is substantially vertical or with a slight tilt toward the intersection portion (13) of the "inverted V";
- a rear fork arm (130) rigidly extending between a transverse rotation axis of the pedals (120) and a transversal rotation axis of the rear wheel (131), wherein said fork arm (130) is rigidly connected or pivoted to the end (11a) of the first arm,
- a steering arm (141) rotatably inserted in said steering tube (14) and associated with said front wheel (131).

4. A vehicle according to claim 3, wherein the direction of extension of the second arm (12) makes an angle β of 40° to 70° with respect to an axis (Z1-Z1) parallel to the vertical direction (Z-Z) and passing through the end (11a) of the first arm facing the intersection portion (13).

5. A vehicle according to claim 3 or 4, wherein the first rear arm (11) makes an angle α of -20° to +20° with respect to an axis (Z1-Z1) parallel to the vertical direction (Z-Z) and passing through the end (11a) of the first arm facing the intersection portion (13).

6. A vehicle according to any one of the preceding claims from 3 to 5, **characterised in that** the coupling between the end (12a) facing the vertex (13) of the second arm (12) and the front tube (14) comprises a transverse axis joint (18) for the relative rotation of the tube (14) with respect to the second arm (12).

7. A vehicle according to any one of the preceding claims from 3 to 6, **characterised in that** the steering arm (141) extends between a handlebar (140) and an end fork (142) passing through the tube (14); said steering arm (141) comprising a transverse joint (141a) placed between the tube (14) and the handlebar (140), preferably near said tube (14).

8. A vehicle according to any one of the preceding claims from 3 to 7, **characterised in that** it comprises a tie rod (15;115) for connecting the arms (11,12) of the inverted V and/or of the fork arm (130) to the second arm (12).

9. A vehicle according to claim 8, **characterised in that** said tie rod (15) is implemented by a rigid element (115) or wire (15).

10. A vehicle according to any one of the preceding claims from 3 to 9, **characterised in that** the transverse rotation axis of the pedals (120) is inserted in a transverse axis tube (16) located at the front end of the fork arm (130).

11. A vehicle according to claim 10, **characterised in that** said tube (16) is placed at the end (11a) of the first arm (11).

12. A vehicle according to any one of the preceding claims from 3 to 11, **characterised in that** it comprises a mechanical stop (135) operatively interposed between said fork arm (130) and said first arm (11) in order to hold the fork arm (130) in place while the bicycle is in motion.

## Patentansprüche

1. Rahmen für Fahrzeug mit mindestens zwei Radachsen (131,132), die entlang von drei zueinander orthogonalen Richtungen verlaufen, jeweils längs (X-X) für die Länge, vertikal (Z-Z) für die Höhe und quer (Y-Y) für die Breite, wobei die genannten Radachsen parallel zu der Querrichtung (Y-Y) sind; wobei der genannte Rahmen die Form eines "umgekehrten V" in einer Längs-Vertikalebene (X-Z) aufweist, die von der Längsrichtung (X-X) der Länge und von der vertikalen Richtung (Z-Z) der Höhe des Rahmens (10) definiert wird und einen ersten hinteren Ausleger (11) und einen zweiten vorderen Ausleger (12) umfasst, die in einem oberen Überschneidungsabschnitt (13) zusammenlaufen, wobei die Enden (11a, 12a) der Ausleger (11,12), die dem oberen Überschneidungsabschnitt (13) gegenüberliegen, bei Gebrauch auf einer Höhe unter der des Überschneidungsabschnitts (13) in der vertikalen Richtung (Z-Z) angeordnet sind und das Ende (12a) des zweiten Auslegers (12) mit einem vorderen Lenkrohr (14) mit im Verhältnis zu dem genannten zweiten Ausleger (12) geneigter Achse gekuppelt ist, um mit diesem einen Winkel in der Längs-Vertikalebene (X-Z) zu definieren;
bei dem ein erstes Querachsengelenk (17) an dem Überschneidungsabschnitt (13) der beiden Ausleger (11, 12) platziert ist
und bei dem der erste (11) oder der zweite Ausleger (12) einen Verlauf über den Überschneidungsabschnitt (13) hinaus aufweist, der von einem Abschnitt (11c) des Auslegers definiert wird, dessen freies Ende mit einem Sattel (110) des Fahrzeugs gekoppelt ist,
und bei dem der erste Ausleger (11) dazu bestimmt ist, mindestens einem Teil einer auf den Sattel (110) wirkenden vertikalen Last standzuhalten und an den Boden zu übertragen.

2. Rahmen nach Anspruch 1, **dadurch gekennzeichnet, dass**, in einer Gebrauchskonfiguration, die Verlaufsrichtung des zweiten Auslegers (12) einen Winkel β von 40° bis 70° im Verhältnis zu einer parallel zu der vertikalen Richtung (Z-Z) liegenden Achse (Z1-Z1) bildet, die durch das Ende (11a) des dem Überschneidungsabschnitt (13) gegenüberliegenden Auslegers verläuft.

3. Fahrzeug mit mindestens zwei Radachsen (131, 132), die entlang von drei zueinander orthogonalen Richtungen verlaufen, jeweils längs (X-X) für die Länge, vertikal (Z-Z) für die Höhe und quer (Y-Y) für die Breite, wobei die genannten Radachsen parallel zu der Querrichtung (Y-Y) sind, das Folgendes umfasst:
- mindestens ein Vorderrad (132) und mindestens ein Hinterrad (131);
- einen Rahmen nach Anspruch 1 oder 2, bei dem die genannte Achse des vorderen Lenkrohrs (14) im Wesentlichen vertikal oder leicht zu dem Überschneidungsabschnitt (13) des "umgekehrten V" geneigt ist;
- einen hinteren Gabelausleger (130), der steif zwischen einer Querdrehachse der Pedale (120) und einer Querdrehachse des Hinterrads (131) verläuft, wobei der genannte Gabelausleger (130) steif oder schwenkbar mit dem Ende (11a) des ersten Auslegers verbunden ist,
- einen Lenkausleger (141), der drehbar in das genannte Lenkrohr (14) eingesetzt und mit dem genannten Vorderrad (131) verbunden ist.

4. Fahrzeug nach Anspruch 3, bei dem die Verlaufsrichtung des zweiten Auslegers (12) einen Winkel β von 40° bis 70° im Verhältnis zu einer zu der vertikalen Richtung (Z-Z) parallelen Achse (Z1-Z1) bildet, die durch das Ende (11a) des dem Überschneidungsabschnitt (13) gegenüberliegenden ersten Auslegers verläuft.

5. Fahrzeug nach Anspruch 3 oder 4, bei dem der erste hintere Ausleger (11) einen Winkel α von -20° bis +20° im Verhältnis zu einer parallel zu der vertikalen Richtung (Z-Z) liegenden Achse (Z1-Z1) bildet, die durch das Ende (11a) des dem Überschneidungsabschnitt (13) gegenüberliegenden ersten Auslegers verläuft.

6. Fahrzeug nach einem beliebigen der vorangegangenen Ansprüche 3 bis 5, **dadurch gekennzeichnet, dass** die Kupplung zwischen dem Ende (12a) gegenüber dem Scheitelpunkt (13) des zweiten Auslegers (12) und dem vorderen Lenkrohr (14) ein Querachsengelenk (18) für die relative Drehung des Lenkrohrs (14) im Verhältnis zu dem zweiten Ausleger (12) umfasst.

7. Fahrzeug nach einem beliebigen der vorangegangenen Ansprüche 3 bis 6, **dadurch gekennzeichnet, dass** der Lenkausleger (141) zwischen einem Lenker (140) und einer Endgabel (142) verläuft, die durch das Rohr (14) verläuft; wobei der genannte Lenkausleger (141) ein zwischen dem Lenkrohr (14) und dem Lenker (140), vorzugsweise in der Nähe des genannten Lenkrohrs (14), platziertes Quergelenk (141a) umfasst.

8. Fahrzeug nach einem beliebigen der vorangegangenen Ansprüche 3 bis 7, **dadurch gekennzeichnet, dass** es eine Zugstange (15;115) zum Verbinden der Ausleger (11,12) des umgekehrten V und/oder des Gabelauslegers (130) mit dem zweiten Ausleger (12) umfasst.

9. Fahrzeug nach Anspruch 8, **dadurch gekennzeichnet, dass** die genannte Zugstange (15) durch ein steifes Element (115) oder einen Draht (15) implementiert wird.

10. Fahrzeug nach einem beliebigen der vorangegangenen Ansprüche 3 bis 9, **dadurch gekennzeichnet, dass** die Querdrehachse der Pedale (120) in ein am vorderen Ende des Gabelauslegers (130) positioniertes Querachsenrohr (16) eingesetzt ist.

11. Fahrzeug nach Anspruch 10, **dadurch gekennzeichnet, dass** das genannte Rohr (16) am Ende (11a) des ersten Auslegers (11) platziert ist.

12. Fahrzeug nach einem beliebigen der vorangegangenen Ansprüche 3 bis 11, **dadurch gekennzeichnet, dass** es eine operativ zwischen dem genannten Gabelausleger (130) und dem genannten ersten Ausleger (11) eingefügte mechanische Stoppvorrichtung (135) umfasst, um den Gabelausleger (130), während das Fahrrad sich fortbewegt, an Ort und Stelle zu halten.

## Revendications

1. Châssis pliable pour véhicule doté d'au moins deux essieux de roue (13,132), s'étendant le long d'un ensemble de trois directions réciproquement orthogonales, respectivement longitudinale (X-X) pour la longueur, verticale (Z-Z) pour la hauteur, et transversale (Y-Y) pour la largeur, lesdits essieux de roue étant parallèles à la direction transversale (Y;Y) ; ledit châssis prenant la forme de « V inversé » sur un plan longitudinal-vertical (X-Z) défini par la direction longitudinale (X-X) de la longueur et par la direction verticale (Z-Z) de la hauteur du châssis (10), et comprenant un premier bras arrière (11) et un second bras avant (12) fusionnés dans une partie d'intersection supérieure (13), les extrémités (11a, 12a) des bras (11, 12), faisant face à la partie d'intersection supérieure (13), étant disposées, pendant l'utilisation, à un niveau inférieur par rapport à celui de la partie d'intersection (13) dans la direction verticale (Z-Z), étant l'extrémité (12a) du second bras (12) couplée à un tube de commande avant (14) doté d'un axe incliné par rapport audit second bras (12) de façon à définir un angle avec celui-ci sur le plan longitudinal-vertical (X-Z) ;
dans lequel un premier (17) joint d'axe transversal est placé sur la partie d'intersection (13) des deux bras (11, 12)
et dans lequel le premier (11) ou le second bras (12) a une extension au-delà de la partie d'intersection (13) définie par une section (11c) du bras dont l'extrémité libre est couplée à une selle (110) du véhicule,
et dans lequel le premier bras (11) est destiné à supporter et décharger au sol au moins une partie d'un poids vertical pesant sur la selle (110).

2. Châssis pliable selon la revendication 1, **caractérisé en ce que**, dans une configuration d'utilisation, la direction d'extension du second bras (12) forme un angle β compris entre 40° et 70° par rapport à un axe (Z1-Z1) parallèle à la direction verticale (Z-Z) et passant à travers l'extrémité (11a) du premier bras faisant face à la partie d'intersection (13).

3. Véhicule doté d'au moins deux essieux de roue (131, 132), s'étendant le long d'un ensemble de trois directions réciproquement orthogonales, respectivement longitudinale (X-X) pour la longueur, verticale (Z-Z) pour la hauteur et transversale (Y-Y) pour la largeur, lesdits essieux de roue étant parallèles à la direction transversale (Y-Y), comprenant :
- au moins une roue avant (132) et au moins une roue arrière (131) ;
- un châssis pliable selon la revendication 1 ou 2, dans lequel ledit axe du tube de commande avant (14) est sensiblement vertical ou doté d'une légère inclinaison vers la partie d'intersection (13) du « V inversé » ;
- un bras de fourche arrière (130) s'étendant de manière rigide entre un axe de rotation transversal des pédales (120) et un axe de rotation transversal de la roue arrière (131), dans lequel ledit bras de fourche (130) est relié de manière rigide à ou pivoté sur l'extrémité (11a) du premier bras,
- un bras de direction (141) inséré de manière pivotante dans ledit tube de commande (14) et associé à ladite roue avant (131).

4. Véhicule selon la revendication 3, dans lequel la direction d'extension du second bras (12) forme un angle β compris entre 40° et 70° par rapport à un axe (Z1-Z1) parallèle à la direction verticale (Z-Z) et passant à travers l'extrémité (11a) du premier bras faisant face à la partie d'intersection (13) .

5. Véhicule selon la revendication 3 ou 4, dans lequel le premier bras arrière (11) forme un angle α compris entre -20° et +20° par rapport à un axe (Z1-Z1) parallèle à la direction verticale (Z-Z) et passant à travers l'extrémité (11a) du premier bras faisant face à la partie d'intersection (13).

6. Véhicule selon l'une quelconque des revendications précédentes 3 à 5, **caractérisé en ce que** le couplage entre l'extrémité (12a) faisant face au sommet (13) du second bras (12) et le tube avant (14) comprend un joint d'axe transversal (18) pour la rotation relative du tube (14) par rapport au second bras (12).

7. Véhicule selon l'une quelconque des revendications précédentes 3 à 6, **caractérisé en ce que** le bras de direction (141) s'étend entre un guidon (140) et une fourche d'extrémité (142) passant à travers le tube (14) ; ledit bras de direction (141) comprenant un joint transversal (141a) placé entre le tube (14) et le guidon (14), préférablement près dudit tube (14).

8. Véhicule selon l'une quelconque des revendications précédentes 3 à 7, **caractérisé en ce qu'**il comprend une barre d'accouplement (15; 115) pour relier les bras (11, 12) du V inversé et/ou du bras de fourche (130) au second bras (12).

9. Véhicule selon la revendication 8, **caractérisé en ce que** ladite barre d'accouplement (15) est mise en œuvre par un élément rigide (115) ou un fil (15).

10. Véhicule selon l'une quelconque des revendications précédentes 3 à 9, **caractérisé en ce que** l'axe de rotation transversal des pédales (120) est inséré dans un tube d'axe transversal (16) situé à l'extrémité avant du bras de fourche (130).

11. Véhicule selon la revendication 10, **caractérisé en ce que** ledit tube (16) est placé à l'extrémité (11a) du premier bras (11).

12. Véhicule selon l'une quelconque des revendications précédentes 3 à 11, **caractérisé en ce qu'**il comprend une butée mécanique (135) interposée de manière opérationnelle entre ledit bras de fourche (130) et ledit premier bras (11) afin de maintenir le bras de fourche (130) en place lorsque la bicyclette est en mouvement.
